# DEMANDE DE BREVET EUROPEEN

(11) **EP 2 233 518 A1**
(43) Date de publication de la demande: **29.09.2010**
(21) Numéro de dépôt: 10157061.2
(22) Date de dépôt: 19.03.2010
(51) Int. Cl.: C08K 3/04, C08K 7/22, C08L 63/00

(54) **Procédé de préparation d'un matériau composite thermodurcissable à haute teneur en nanotubes**

(30) Priorité: 23.03.2009 FR 0951842
(71) Demandeur: Arkema France, 92700 Colombes (FR)
(72) Inventeur: Korzhenko, Alexander, 64000, PAU (FR); Miaudet, Pierre, 64110, JURANCON (FR); Merceron, Amélie, 64230, AUSSEVIELLE (FR); Gaillard, Patrice, 64370, HAGETAUBIN (FR)
(74) Mandataire: Cabinet Plasseraud

(57) **Abrégé**

La présente invention a pour objet un procédé de préparation d'un matériau composite renfermant de 15 à 60% en poids de nanotubes, comprenant :
(a) l'introduction, dans un dispositif de compoundage, d'une composition polymérique liquide renfermant au moins une résine thermodurcissable à l'état liquide, de nanotubes, et éventuellement d'un modificateur de rhéologie,
(b) le mélange de la composition polymérique et des nanotubes au sein dudit dispositif, pour former un matériau composite,
(c) la récupération du matériau composite, éventuellement après transformation en une forme physique solide agglomérée telle que des granulés.

Elle se rapporte également au matériau composite ainsi obtenu, ainsi qu'à son utilisation pour la fabrication d'un produit composite.

## Description

La présente invention concerne un procédé de préparation d'un matériau composite à base de résine thermodurcissable et de nanotubes, notamment de carbone, le matériau composite ainsi obtenu, ainsi que son utilisation pour la fabrication de produits composites.

Les matériaux thermodurcissables tels que les résines époxy sont connus pour présenter notamment d'excellentes résistances à la corrosion et aux solvants, une bonne adhésion sur différents substrats et une stabilité thermique supérieure à celle des thermoplastiques. Pour certaines applications, en particulier pour la fabrication de boucliers électrostatiques destinés à l'emballage de dispositifs électroniques, il peut être utile de conférer en outre à ces résines thermodurcissables des propriétés de conduction électrique et/ou d'améliorer leurs propriétés mécaniques. Pour ce faire, il est possible de leur incorporer des charges conductrices telles que des nanotubes de carbone (ou NTC).

Celles-ci doivent être incorporées dans la résine thermodurcissable avant son durcissement. Toutefois, les tentatives faites à ce jour pour incorporer des NTC - ayant une structure très enchevêtrée - dans des résines thermodurcissables se sont heurtées à la formation d'agrégats de NTC nécessitant l'utilisation de mélangeurs à billes ou de mélangeurs à très fort cisaillement pour les désagréger. En outre, les NTC entraînent une forte viscosification de la résine. Il s'ensuit qu'en pratique, le taux d'incorporation de NTC dans des résines thermodurcissables se trouve limité aujourd'hui à 1,5 ou 2% en poids.

Ainsi, le document US-5,744,235 décrit un procédé de préparation de matériau composite contenant des charges telles que des fibres de carbone ou de verre, des moustaches (whiskers) de carbone ou carbure de silicium, des particules de silice ou de noir de carbone, ou encore des fibrilles de carbone dans une matrice métallique, céramique, ou de résine organique telle que les élastomères, les résines thermoplastiques ou thermodurcissables. Ce procédé comprend une étape a) de mélangeage des charges dans la matrice puis la soumission de ce mélange à une étape b) de cisaillement et d'application de forces de façon à réduire la taille des agrégats de charges d'une valeur de pas plus de 1000 fois la taille des agrégats de départ. L'étape b) est réalisée avec un mélangeur à boules conventionnel. Ce procédé n'est pas du tout approprié pour réduire la taille des nanotubes de carbone obtenu par un procédé catalytique en phase vapeur (Catalyst Chemical Vapor Deposition en terminologie anglo-saxonne), à une taille permettant leur introduction de façon homogène dans une matrice organique.

Par ailleurs, le document WO 2009/018193 divulgue une composition renfermant une résine époxy, un agent de renforcement amphiphile, une nanocharge inorganique et éventuellement un agent de durcissement, dans laquelle la nanocharge peut par exemple représenter de 0,1 à 50% en poids de la résine époxy. Parmi les nanocharges utilisables, il est fait mention des nanotubes de carbone. Toutefois, l'unique exemple de ce document met en oeuvre 2,5% en poids de nanoparticules en silice. En pratique, il n'est pas possible d'obtenir des matériaux composites à 5% en poids et plus de NTC, a fortiori des mélanges-maîtres à au moins 25% en poids de NTC, en suivant l'enseignement de ce document.

D'autres solutions ont été proposées pour réaliser des composites NTC / polymère thermodurcissables, en ayant recours à des dispositifs de malaxage.

Ainsi, le document FR 2 893 947 décrit une composition pulvérulente qui comprend des NTC mis en contact (notamment imprégnés) avec un composé A qui peut être de nature très variée, et notamment être une résine thermodurcissable. L'Exemple 6 de ce document divulgue ainsi une résine thermodurcissable de type DER^{®} 332, qui est mélangée avec les NTC (50% en poids) dans un "micro-malaxeur Rheocord".

En outre, le document US 2007/238826 divulgue un procédé de préparation de matériaux thermodurcis conducteurs, qui consiste à soumettre à un procédé d'extrusion une composition renfermant des NTC et une résine thermodurcissable de viscosité adéquate (c'est-à-dire en pratique supérieure à 15 poises). Cette résine peut se trouver sous forme liquide ou solide. L'extrusion peut être effectuée dans différents dispositifs dont une extrudeuse mono-vis ou bi-vis ou un co-malaxeur Buss^{®}.

Dans l'Exemple 1 de ce document, une résine EPON^{®} 1001F est introduite dans une extrudeuse bi-vis à l'état fondu, après imprégnation avec des NTC représentant 5% du poids de la composition. Il est indiqué que la viscosité du mélange est trop faible (4,4 poises) pour que le procédé puisse être convenablement mis en oeuvre. Dans l'Exemple 2, une résine EPON^{®} 1009 F est introduite dans une extrudeuse bi-vis sous forme solide, après pré-imprégnation avec 15% en poids de NTC.

Il reste toutefois souhaitable de disposer d'un moyen permettant de disperser simplement et de façon homogène, à l'échelle industrielle, des taux élevés de NTC dans une résine thermodurcissable pour fabriquer des mélanges-maîtres ou pré-composites susceptibles d'être aisément manipulés puis dilués dans une matrice polymère pour former des pièces composites.

Dans ce contexte, la Demanderesse a découvert que ce besoin pouvait être satisfait en introduisant la résine thermodurcissable à l'état liquide dans un dispositif de compoundage où elle est malaxée avec les nanotubes.

La présente invention a ainsi pour objet un procédé de préparation d'un matériau composite renfermant de 15 à 60% en poids de nanotubes, comprenant :
(a) l'introduction, dans un dispositif de compoundage, d'une composition polymérique liquide renfermant au moins une résine thermodurcissable à l'état liquide, de nanotubes et éventuellement d'un modificateur de rhéologie,
(b) le mélange de la composition polymérique et des nanotubes au sein dudit dispositif, pour former un matériau composite,
(c) la récupération du matériau composite, éventuellement après transformation en une forme physique solide agglomérée telle que des granulés.

Par « dispositif de compoundage », on entend, dans la présente description, un appareillage classiquement utilisé dans l'industrie des matières plastiques pour le mélange à l'état fondu de polymères thermoplastiques et d'additifs en vue de produire des composites. Dans cet appareillage, la composition polymérique et les additifs sont mélangés à l'aide d'un dispositif à fort cisaillement, par exemple une extrudeuse à double vis co-rotatives ou un co-malaxeur comprenant un rotor pourvu d'ailettes adaptées à coopérer avec des dents montées sur un stator. La matière fondue sort généralement de l'appareillage soit sous forme physique solide agglomérée telle que des granulés, soit sous forme de joncs, de bande ou de film.

Des exemples de co-malaxeurs utilisables selon l'invention sont les co-malaxeurs BUSS^{®} MDK 46 et ceux de la série BUSS^{®} MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxée. L'arbre est entraîné en rotation, et pourvu d'un mouvement d'oscillation dans la direction axiale, par un moteur. Ces co-malaxeurs peuvent être équipés d'un système de fabrication de granulés, adaptés par exemple à leur orifice de sortie, qui peut être constitué d'une vis d'extrusion ou d'une pompe.

Les co-malaxeurs utilisables selon l'invention ont de préférence un rapport de vis L/D allant de 7 à 22, par exemple de 10 à 20, tandis que les extrudeuses co-rotatives ont avantageusement un rapport L/D allant de 15 à 56, par exemple de 20 à 50.

La Demanderesse a mis en évidence que ce procédé permettait d'obtenir des matériaux composites, notamment des mélanges-maîtres, comprenant au moins 15% en poids de nanotubes, tels que des NTC, et qui sont aisément manipulables, dans le cas où ils se présentent sous une forme solide agglomérée, notamment sous la forme de granulés, en ce sens qu'ils peuvent être transportés en sacs du centre de production au centre de transformation. Ces matériaux composites peuvent en outre être mis en forme suivant les méthodes classiquement utilisées pour la mise en forme de matériaux thermoplastiques, telles que l'extrusion, l'injection ou la compression, contrairement aux composites thermodurcissables de l'art antérieur qui nécessitent généralement d'être coulés dans des moules.

Par « résine thermodurcissable », on entend, dans la présente description, un matériau qui est susceptible d'être durci, généralement en présence d'un durcisseur, sous l'effet de la chaleur, d'un catalyseur, ou d'une combinaison des deux, pour obtenir une résine thermodure. Celle-ci est constituée d'un matériau renfermant des chaînes polymères de longueur variable liées entre elles par des liaisons covalentes, de manière à former un réseau tridimensionnel. Sur le plan de ses propriétés, cette résine thermodure est infusible et insoluble. Elle peut être ramollie en la chauffant au-dessus de sa température de transition vitreuse (Tg) mais, une fois qu'une forme lui a été conférée, elle ne peut être remise en forme ultérieurement par chauffage.

Les résines thermodurcissables utilisables selon l'invention comprennent : les polyesters insaturés, les résines époxy, les esters vinyliques, les résines phénoliques, les polyuréthanes, les cyanoacrylates et les polyimides, tels que les résines bis-maléimide, les aminoplastes (résultant de la réaction d'une amine telle que la mélamine avec un aldéhyde tel que le glyoxal ou le formaldéhyde) et leurs mélanges, sans que cette liste ne soit limitative.

Les polyesters insaturés résultent de la polymérisation par condensation d'acides dicarboxyliques renfermant un composé insaturé (tel que l'anhydride maléique ou l'acide fumarique) et de de glycols tels que le propylène glycol. Ils sont généralement durcis par dilution dans un monomère réactif, tel que le styrène, puis réaction de ce dernier avec les insaturations présentes sur ces polyesters, généralement à l'aide de peroxydes ou d'un catalyseur, en présence de sels de métaux lourds ou d'une amine, ou encore à l'aide d'un photo-initateur, d'un rayonnement ionisant, ou d'une combinaison de ces différentes techniques.

Les esters vinyliques comprennent les produits de la réaction d'époxydes avec l'acide (méth)acrylique. Ils peuvent être durcis après dissolution dans le styrène (de façon similaire aux résines polyesters) ou à l'aide de peroxydes organiques.

Les résines époxy sont constituées de matériaux contenant un ou plusieurs groupes oxiranes, par exemple de 2 à 4 fonctions oxirane par molécule. Dans le cas où elles sont polyfonctionnelles, ces résines peuvent être constituées de polymères linéaires porteurs de groupes époxy terminaux, ou dont le squelette comprend des groupes époxy, ou encore dont le squelette porte des groupes époxy pendants. Elles nécessitent généralement comme agent durcisseur un anhydride d'acide ou une amine.

Ces résines époxy peuvent résulter de la réaction de l'épichlorhydrine sur un bisphénol tel que le bisphénol A. Il peut en variante s'agir d'alkyl- et/ou alkénylglycidyl éthers ou esters ; de polyglycidyl éthers de mono- et polyphénols éventuellement substitués, notamment de polyglycidyl éthers de bisphénol A ; de polyglycidyl éthers de polyols ; de polyglycidyl éthers d'acides polycarboxyliques aliphatiques ou aromatiques ; de polyglycidyl esters d'acides polycarboxyliques ; de polyglycidyl éthers de novolac. En variante encore, il peut s'agir de produits de la réaction de l'épichlorhydrine sur des amines aromatiques ou de dérivés glycidyle de mono- ou diamines aromatiques. On peut également utiliser dans cette invention des époxydes cycloaliphatiques. On préfère selon l'invention utiliser les diglycidyl éthers de bisphénol A (ou DGEBA), F ou A/F. Les résines DGEBA sont particulièrement préférées.

Les nanotubes destinés à être mélangés avec la résine thermodurcissable selon l'invention peuvent être des nanotubes de carbone (ci-après, NTC) ou des nanotubes à base de bore, de phosphore ou d'azote, ou encore des nanotubes renfermant plusieurs de ces éléments ou l'un au moins de ces éléments en combinaison avec du carbone. Il s'agit avantageusement de nanotubes de carbone. Ceux-ci possèdent des structures cristallines particulières, de forme tubulaire, creuses et closes, composées d'atomes disposés régulièrement en pentagones, hexagones et/ou heptagones, obtenues à partir de carbone. Les NTC sont en général constitués d'un ou plusieurs feuillets de graphite enroulés. On distingue ainsi les nanotubes mono-parois (Single Wall Nanotubes ou SWNT) et les nanotubes multi-parois (Multi Wall Nanotubes ou MWNT). Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456. On préfère selon l'invention utiliser des NTC à parois multiples.

Les nanotubes mis en oeuvre selon l'invention ont habituellement un diamètre moyen allant de 0,1 à 200 nm, de préférence de 0,1 à 100 nm, plus préférentiellement de 0,4 à 50 nm et, mieux, de 1 à 30 nm et avantageusement une longueur de plus de 0,1 µm et avantageusement de 0,1 à 20 µm, par exemple d'environ 6 µm. Leur rapport longueur/diamètre est avantageusement supérieur à 10 et le plus souvent supérieur à 100. Ces nanotubes comprennent donc notamment les nanotubes dits "VGCF" (fibres de carbone obtenues par dépôt chimique en phase vapeur, ou Vapor Grown Carbon Fibers). Leur surface spécifique est par exemple comprise entre 100 et 300 m²/g et leur densité apparente peut notamment être comprise entre 0,01 et 0,5 g/cm³ et plus préférentiellement entre 0,07 et 0,2 g/cm³. Les nanotubes de carbone multi-parois peuvent par exemple comprendre de 5 à 15 feuillets et plus préférentiellement de 7 à 10 feuillets.

Un exemple de nanotubes de carbone bruts est notamment disponible dans le commerce auprès de la société ARKEMA sous la dénomination commerciale Graphistrength^{®} C100.

Les nanotubes peuvent être purifiés et/ou traités (en particulier oxydés) et/ou broyés, avant leur mise en oeuvre dans le procédé selon l'invention. Ils peuvent également être fonctionnalisés par des méthodes de chimie en solution comme l'amination ou la réaction avec des agents de couplage.

Le broyage des nanotubes peut être notamment effectué à froid ou à chaud et être réalisé selon les techniques connues mises en oeuvre dans des appareils tels que broyeurs à boulets, à marteaux, à meules, à couteaux, jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes peut être réalisée par lavage à l'aide d'une solution d'acide sulfurique, ou d'un autre acide, de manière à les débarrasser d'éventuelles impuretés minérales et métalliques résiduelles, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés. Une autre voie de purification des nanotubes, destinée en particulier à éliminer le fer et/ou le magnésium et/ou l'alumine qu'ils renferment, consiste à les soumettre à un traitement thermique à plus de 1.000°C.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

On préfère toutefois que les nanotubes soient utilisés dans le procédé selon l'invention à l'état brut.

Par ailleurs, on préfère selon l'invention utiliser des nanotubes obtenus à partir de matières premières d'origine renouvelable, en particulier d'origine végétale, comme décrit dans le document FR 2 914 634.

La quantité de nanotubes mise en oeuvre selon l'invention représente de 15 à 60% en poids, et de préférence de 20 à 50% en poids, par rapport au poids total du matériau composite. La quantité exacte de nanotubes mise en oeuvre peut varier dans ces plages, suivant que le matériau composite recherché est destiné à être directement transformé en une pièce composite ou qu'il se présente sous la forme d'un mélange-maître destiné à être dilué dans une matrice polymère.

Un mélange-maître préféré selon l'invention renferme de 20 à 30% en poids, de préférence 25% en poids, de nanotubes de carbone dans une résine époxy, de préférence un diglycidyl éther de bisphénol A. Un tel mélange-maître est disponible auprès de la société ARKEMA sous la dénomination commerciale Graphistrength^{®} C S1-25.

Le procédé selon l'invention permet de réaliser des matériaux composites de façon extrêmement simple, sans nécessiter d'étape préalable d'imprégnation des nanotubes. Néanmoins, les nanotubes peuvent être introduits dans le dispositif de compoundage soit par une trémie d'alimentation distincte de la zone d'injection du polymère thermodurcissable, soit en mélange avec celui-ci.

Dans la première étape du procédé selon l'invention, la résine thermodurcissable est introduite dans le dispositif de compoundage à l'état liquide. Par "liquide", on entend que la résine est susceptible d'être pompée dans le dispositif de compoundage, c'est-à-dire qu'elle présente avantageusement une viscosité dynamique allant de 0,1 à 30 Pa.s, de préférence de 0,1 à 15 Pa.s. La résine utilisée peut présenter cette viscosité à température ambiante (23°C) ou, à défaut, être chauffée avant injection dans l'appareil de compoundage, de façon à lui conférer la viscosité précitée. On préfère dans ce cas que son point de fusion n'excède pas 100°C.

La viscosité de la résine peut en outre être ajustée en lui ajoutant un ou plusieurs modificateurs de rhéologie, tel que par exemple un solvant réactif ou non réactif. Ceux-ci peuvent être inclus dans la composition polymérique contenant la résine thermodurcissable.

La mesure de la viscosité dynamique est basée sur une méthode générale de détermination des propriétés viscoélastiques de polymères à l'état liquide, à l'état fondu ou à l'état solide. Les échantillons sont soumis à une déformation (ou contrainte), le plus souvent sinusoïdale en tension, compression, flexion ou torsion pour les solides et en cisaillement pour les liquides. La réponse des échantillons à cette sollicitation est évaluée soit par la force ou le couple résultant, soit par la déformation lorsqu'on travaille à contrainte imposée. On détermine ainsi les propriétés viscoélastiques soit en termes de module ou de viscosité, soit en termes de fonction de fluage ou de relaxation. En écoulement, les échantillons sont soumis à un balayage de contraintes et/ou déformations afin de prédire leur comportement en fonction du gradient de cisaillement.

Pour cette détermination, on utilise un viscoélasticimètre, composé des éléments suivants :
- Une enceinte ou un système de régulation thermique (au choix, l'atmosphère lors du test peut être soit de l'azote gaz et/ou liquide, soit de l'air)
- Une unité centrale de commande
- Un système pour la régulation du débit et le séchage de l'air et de l'azote
- Une tête de mesure
- Un système informatique de pilotage de l'appareil et de traitement des données
- Des équipages "porte échantillon"

Comme appareillages utilisables, on peut citer par exemple les appareils RDA2, RSA2, DSR200, ARES ou RME du constructeur Rheometrics, ou MCR301 de Anton Paar.

Les dimensions de l'échantillon sont définies en fonction de sa viscosité et des limites géométriques du système "porte-échantillon" choisi.

Pour la réalisation d'un essai et la détermination de la viscosité dynamique d'une résine thermodurcissable, on suivra méthodologiquement les étapes décrites dans le manuel d'utilisation du viscoélasticimètre utilisé. En particulier, on s'assurera que la relation entre déformation et contrainte est linéaire (viscoélasticité linéaire).

Un exemple d'un agent modificateur de rhéologie utilisable est un copolymère acrylique à blocs tel que le copolymère tribloc pol(méthacrylate de méthyle) /poly(acrylate de butyle) / poly(méthacrylate de méthyle) disponible auprès de la société ARKEMA sous la dénomination commerciale Nanostrength® M52N. Un tel copolymère est particulièrement bien adapté à une utilisation dans une résine époxy, dans laquelle il peut être introduit sous forme de poudre et solubilisé sous agitation afin d'augmenter sa viscosité. Ce copolymère permet en outre d'améliorer la dispersion des nanotubes en facilitant le transfert d'énergie mécanique lors du cisaillement dans l'outil de compoundage, et également de faciliter la formation de granulés à partir de la résine thermodurcissable. En variante, il est possible d'utiliser un copolymère polystyrène / 1,4-polybutadiène / poly(méthacrylate de méthyle) également commercialisé par la société ARKEMA, sous la référence Nanostrength®.

Un autre exemple d'agent modificateur de rhéologie est un ester de glycidyle d'acide gras ramifié tel que l'ester de glycidyle d'acide carboxylique hautement ramifié en C10 commercialisé par la société HEXON sous la dénomination commerciale Cardura® E10P. Outre son effet de réduction de la viscosité, ce composé est également apte à réagir avec le durcisseur des résines époxy. Ajouté en fin de compoundage, il réduit en outre les risques de réticulation des résines époxy en refroidissant le milieu.

Outre ces modificateurs de rhéologie, la composition polymérique utilisée selon l'invention peut renfermer divers additifs tels que des charges à base de graphène autres que des nanotubes (notamment des fullerènes), de la silice ou du carbonate de calcium ; des filtres UV, notamment à base de dioxyde de titane ; des retardateurs de flamme ; et leurs mélanges. La composition polymérique peut en variante ou en plus contenir au moins un solvant de la résine thermodurcissable. Elle peut en outre renfermer des agents d'expansion, notamment les préparations à base de diamine d'acide azodicarbonique telles que celles commercialisées par la société LANXESS sous la dénomination commerciale Genitron®. Il s'agit de composés qui se décomposent à 140-200°C pour former, lors de l'étape de compoundage, des cavités dans le matériau composite qui facilitent son introduction ultérieure dans une matrice polymère. D'autres additifs utilisables sont les durcisseurs de la résine thermodurcissable, sous réserve que leur température d'activation soit supérieure à la température de compoundage.

L'étape de compoundage est généralement mise en oeuvre à une température qui est fonction du polymère spécifiquement utilisé et généralement mentionnée par le fournisseur du polymère. A titre d'exemple, la température de compoundage peut aller de 20°C à 260°C, par exemple de 30°C à 260°C, en particulier de 80°C à 120°C.

Au terme du procédé selon l'invention, on obtient un matériau composite qui peut, après refroidissement, se trouver avantageusement sous une forme solide directement utilisable. L'invention a également pour objet le matériau composite susceptible d'être obtenu suivant le procédé ci-dessus.

Ce matériau composite peut être utilisé tel quel, c'est-à-dire mis en forme selon toute technique appropriée, notamment par injection, extrusion, compression ou moulage, suivie d'un traitement à 140-150°C, par exemple, destiné à activer le durcisseur. Ce dernier peut soit avoir été ajouté au matériau composite pendant l'étape de compoundage (dans le cas où sa température d'activation est supérieure à la température de compoundage), soit être ajouté au matériau composite immédiatement avant sa mise en forme.

Dans cette forme d'exécution, le matériau composite selon l'invention peut ainsi être utilisé pour fabriquer des films, des matériaux pré-imprégnés, des rubans, des profilés, des bandes ou des fibres. A cet effet, il est possible de prévoir à la sortie du dispositif de compoundage une filière de mise en forme du matériau composite.

En variante, le matériau composite selon l'invention peut être utilisé comme mélange-maître et donc dilué dans une matrice polymère pour former un produit composite après mise en forme et traitement thermique. Là encore, le durcisseur peut être introduit pendant l'étape de compoundage, ou lors de formulation de la matrice polymère ou encore lors de la mise en forme de la matrice polymère. Dans cette forme d'exécution de l'invention, le produit composite final peut contenir de 0,001 à 10% en poids de nanotubes, généralement de 0,1 à 5% en poids de nanotubes, de préférence de 0,1 à 2% en poids de nanotubes.

L'invention a également pour objet l'utilisation du matériau composite décrit précédemment pour la fabrication d'un produit composite et/ou en vue de conférer au moins une propriété électrique, mécanique et/ou thermique à une matrice polymère.

Elle a encore pour objet un procédé de fabrication d'un produit composite comprenant :
- la fabrication d'un matériau composite suivant le procédé décrit précédemment, et
- l'introduction du matériau composite dans une matrice polymère.

La matrice polymère contient généralement au moins un polymère choisi parmi les homo- ou copolymères à gradients, à blocs, statistiques ou séquencés, thermodurcissables. On utilise de préférence selon l'invention au moins une résine thermodurcissable choisie parmi celles listées précédemment.

La matrice polymère peut en outre renfermer au moins un durcisseur et/ou un catalyseur de durcissement pour la résine thermodurcissable, comme indiqué précédemment, ainsi que divers adjuvants et additifs tels que des lubrifiants, des pigments, des stabilisants, des charges ou renforts, des agents anti-statiques, des fongicides, des agents ignifugeants et des solvants.

Avantageusement, lorsqu'il se présente sous forme de granulés, le mélange-maître est d'abord immergé dans une partie de la matrice polymère pendant plusieurs heures, par exemple pendant une nuit, et éventuellement chauffé, par exemple à environ 80°C, afin de ramollir les granulés avant de les introduire dans la reste de la matrice polymère. On peut utiliser des moyens de chauffage tels que micro-ondes ou induction permettant d'utiliser les capacités résistives des NTC et chauffer à coeur le mélange-maître très rapidement. Le mélange est ensuite de préférence soumis à un fort cisaillement, notamment à l'aide d'un dispositif rotor-stator. Il est ensuite possible d'ajouter les additifs de la matrice polymère au mélange.

Dans cette forme d'exécution de l'invention, le dispositif de compoundage, dans lequel est fabriqué la mélange-maître, peut être couplé à un autre dispositif destiné à être alimenté, d'une part, par le mélange-maître et, d'autre part, par la matrice polymère décrite précédemment. Cet autre dispositif peut dans ce cas être pourvu d'une filière de mise en forme du produit composite formé.

L'invention sera mieux comprise à la lumière des exemples non limitatifs et purement illustratifs suivants.

### EXEMPLES

### Exemple 1 : Fabrication d'un mélange-maître à base de résine époxy

On a introduit, dans la première trémie d'alimentation d'un co-malaxeur BUSS^{®} MDK 46 (L/D = 11), équipé d'une vis d'extrusion et d'un dispositif de granulation, des nanotubes de carbone (Graphistrength^{®} C100 d'ARKEMA) et une poudre de copolymère acrylique (Nanostrength M52N D'ARKEMA). Une base de résine époxy (DGEBA ou diglycidyl éther de bisphénol A) a été injectée sous forme liquide à 80°C dans la 1^{ère} zone du co-malaxeur. Les consignes de température au sein du co-malaxeur étaient les suivantes : Zone 1 = 120°C, Zone 2 = 120°C, Vis = 80°C. Le débit était réglé à 15 kg/h.

En sortie d'appareil, on a obtenu des granulés d'un mélange-maître renfermant 35% en poids de nanotubes, 45% en poids de résine époxy et 20% en poids de copolymère acrylique.

Ces granulés peuvent être ensuite dilués dans une matrice polymère, dans un appareillage permettant un chauffage à 130-140°C.

### Exemple 2 : Fabrication d'un mélange-maître à base de résine époxy

On a préparé, dans le même co-malaxeur que celui décrit à l'Exemple 1 une formulation renfermant : 25% en poids de nanotubes de carbone, 70% en poids de résine époxy et 5% en poids d'un diluant réactif (Cordura E10P de HEXON).

Les nanotubes ont été introduits dans la première trémie d'alimentation du co-malaxeur. La résine époxy a été injectée à 80°C dans la 1^{ère} zone du co-malaxeur et le diluant a été injecté à 40°C dans la 2^{ème} zone du co-malaxeur. Après malaxage, à la sortie de l'extrudeuse de reprise portée à 70-80°C, on a obtenu un matériau composite solide en sortie de filière, qui a été conditionné directement sans granulation.

Ce mélange-maître peut être dilué dans une formulation thermodurcissable à température ambiante pour fabriquer un produit composite.

Une pré-imprégnation de ce mélange maître dans un composant liquide de la formulation thermodurcissable, pendant quelques heures, facilite davantage son introduction dans la formulation.

## Revendications

1. Procédé de préparation d'un matériau composite renfermant de 15 à 60% en poids de nanotubes, comprenant :
(a) l'introduction, dans un dispositif de compoundage, d'une composition polymérique liquide renfermant au moins une résine thermodurcissable à l'état liquide, de nanotubes et éventuellement d'un modificateur de rhéologie,
(b) le mélange de la composition polymérique et des nanotubes au sein dudit dispositif, pour former un matériau composite,
(c) la récupération du matériau composite, éventuellement après transformation en granulés.

2. Procédé selon la revendication 1, **caractérisé en ce que** le dispositif de compoundage est une extrudeuse à double vis co-rotatives, ayant de préférence un rapport de vis L/D allant de 15 à 56, plus préférentiellement de 20 à 50.

3. Procédé selon la revendication 1, **caractérisé en ce que** le dispositif de compoundage est un co-malaxeur ayant de préférence un rapport de vis L/D allant de 7 à 22, plus préférentiellement de 10 à 20.

4. Procédé selon l'une quelconque des revendications 1 à 3, **caractérisé en ce que** la composition polymérique renferme au moins une résine thermodurcissable qui est choisie parmi : les polyesters insaturés, les résines époxy, les esters vinyliques, les résines phénoliques, les polyuréthanes, les cyanoacrylates et les polyimides, tels que les résines bis-maléimide, les aminoplastes (résultant de la réaction d'une amine telle que la mélamine avec un aldéhyde tel que le glyoxal ou le formaldéhyde) et leurs mélanges.

5. Procédé selon l'une quelconque des revendications 1 à 4, **caractérisé en ce que** les nanotubes sont des nanotubes de carbone.

6. Procédé selon l'une quelconque des revendications 1 à 5, **caractérisé en ce que** le matériau composite renferme de 20 à 50% en poids de nanotubes, par rapport au poids total du matériau composite.

7. Matériau composite susceptible d'être obtenu suivant le procédé selon l'une quelconque des revendications 1 à 6.

8. Utilisation du matériau composite selon la revendication 7 pour la fabrication d'un produit composite et/ou en vue de conférer au moins une propriété électrique, mécanique et/ou thermique à une matrice polymère.

9. Utilisation du matériau composite selon la revendication 7 pour la fabrication de films, de matériaux pré-imprégnés, de rubans, de profilés, de bandes ou de fibres.

10. Procédé de fabrication d'un produit composite comprenant :
- la fabrication d'un matériau composite suivant le procédé selon l'une quelconque des revendications 1 à 6, et
- l'introduction du matériau composite dans une matrice polymère.
